# EUROPÄISCHE PATENTANMELDUNG

(11) **EP 2 960 731 A1**
(43) Veröffentlichungstag der Anmeldung: **30.12.2015**
(21) Anmeldenummer: 14174029.0
(22) Anmeldetag: 26.06.2014
(51) Int. Cl.: G05B 19/042, G06F 11/36

(54) **Verfahren zur Unterbrechung der Ausführung eines Gesamtprogramms eines elektronischen Steuergeräts**

(71) Anmelder: dSPACE digital signal processing and control engineering GmbH, 33102 Paderborn (DE)
(72) Erfinder: Stockmann, Lars, 33100 Paderborn (DE); Edling, Fabian, 32699 Extertal (DE)

(57) **Zusammenfassung**

Verfahren zur Unterbrechung einer Ausführung von einem Gesamtprogramm (1) eines elektronischen Steuergeräts, wobei das Gesamtprogramm (1) aufweist, ein erstes Programm (11) mit einer ersten Variablen (12), wobei das erste Programm (11) einen ersten Wert der ersten Variablen (12) in einen ersten Speicherbereich eines Speichers speichert oder den ersten Wert der ersten Variablen (12) aus den ersten Speicherbereich des Speichers ausliest, und ein zweites Programm (21) mit einer zweiten Variablen, wobei das zweite Programm (21) den ersten Wert der ersten Variablen (12) aus dem ersten Speicherbereich des Speichers speichert oder den ersten Wert der ersten Variablen (12) aus dem ersten Speicherbereich des Speichers ausliest, um zwischen dem ersten Programm und dem zweiten Programm eine Verknüpfung herzustellen, wobei eine grafische Modellierungsumgebung (201) ausgeprägt ist, und die Modellierungsumgebung (201) grafische Modellelemente aufweist, wobei in der grafischen Modellierungsumgebung (201) das erste Programm (11) durch ein erstes Modellelement (202) repräsentiert wird, und das zweite Programm (21) durch ein zweites Modellelement (203) repräsentiert wird, und die Verknüpfung zwischen dem ersten Programm und dem zweiten Programm durch ein drittes Modellelement (205) repräsentiert wird dadurch gekennzeichnet, dass mittels der Modellierungsumgebung (201) eine Haltebedingung (2) spezifiziert wird, wobei mittels der Haltebedingung (2) eine zur Unterbrechung der Ausführung des Gesamtprogramms (1) führende Programmzustandsänderung (3) festgelegt wird, das Gesamtprogramm (1) ausgeführt wird, während der Ausführung des Gesamtprogramms (1) eine Programmzustandsänderung (3) detektiert wird und als Programmzustandsänderung (3) angesehen wird ein Beginn und/oder Ende der Ausführung des ersten und/oder des zweiten Programms (21) und/oder ein Lese- und/oder Schreibzugriff auf den ersten Wert des ersten Speicherbereichs und/oder eine Änderung des ersten Werts des ersten Speicherbereichs, und die Ausführung des Gesamtprogramms (1) unterbrochen wird, wenn die in der Haltebedingung (2) spezifizierte Programmzustandsänderung (3) erfolgt.

## Beschreibung

Die Erfindung betrifft ein Verfahren zur Unterbrechung der Ausführung von einem Gesamtprogramm (1) eines elektronischen Steuergeräts gemäß dem Oberbegriff des Patentanspruchs 1.

Steuergeräte sind elektronische Module, die überwiegend an Orten eingebaut werden, an denen etwas elektronisch gesteuert oder geregelt wird. Elektronische Steuergeräte werden besonders im Automobilbereich eingesetzt und steuern dort beispielsweise mechanische oder elektrische Aktoren oder werten Sensordaten aus. Steuergeräte zählen zu den eingebetteten Systemen. Demzufolge wird auf einem Steuergerät ein Gesamtprogramm (1) zur Steuerung der Elektronik, zur Verarbeitung von Daten und zur Kommunikation ausgeführt.

Im Entwicklungsprozess eines Gesamtprogramms (1) von einem elektronischen Steuergerät ist es üblich, dass viele Entwickler gleichzeitig an der Programmierung arbeiten. Die einzelnen Aspekte des Gesamtprogramms (1) wie zum einen die Programmarchitektur, das heißt die Verknüpfung bzw. Kommunikation der einzelnen Programme bzw. Einzelfunktionalitäten, und zum anderen die einzelnen Funktionen bzw. Programme für sich, werden dabei mit unterschiedlichen Werkzeugen häufig modellbasiert entwickelt. Dieser verteilte Prozess ist fehleranfällig.

An die Programmarchitektur elektronischer Steuergeräte, insbesondere im Automobilsektor, werden besondere Anforderungen gestellt. Im Automobilsektor muss durch die Programmarchitektur sichergestellt werden, dass Einzelfunktionalitäten bzw. Programme unter der Prämisse einer maximalen funktionellen Sicherheit wiederverwendet, ausgetauscht, skaliert und integriert werden können. Zur Erfüllung dieser Anforderungen existieren im Automobilsektor verschiedenen Standards, wie z. B. "Automotive Open System Architecture" (AUTOSAR), womit Spezifikationen für die Architektur des Gesamtprogramms (1) vorgegeben werden.

Nach dem Zusammenfügen des Gesamtprogramms (1) mittels einer Modellierungsumgebung (201) entsprechend eines Standards bzw. einer Spezifikation schließt sich am Ende des Entwicklungsprozesses üblicherweise ein Test an, wobei überprüft wird, ob das Gesamtprogramm (1) den Anforderungen des Architektur-Modells und der Spezifikation entspricht, ob die korrekte Funktionalität der Einzelprogramme gegeben ist, und ob die Bestandteile des Gesamtprogramms (1) korrekt zusammenwirken.

Aus dem Produktkatalog der dSPACE GmbH des Jahres 2014 (Seiten 40-49, http://www.dspace.com/de/gmb/home/medien/product_info.cfm) ist die Modellierungsumgebung (201) SystemDesk zur grafischen Modellierung eines Gesamtprogramms (1) eines elektronischen Steuergeräts bekannt, welche auch ein simulationsbasiertes Testen zur Überprüfung der zuvor genannten Aspekte unterstützt.

Bisher gibt es zur Überprüfung des Gesamtprogramms (1) in Verbindung mit simulationsbasiertem Testen die Möglichkeiten des Quellcode-Debuggings und des Plottens von Messvariablen.

Vor diesem Hintergrund besteht die Aufgabe der Erfindung darin, ein effizientes Verfahren anzugeben, das den Stand der Technik weiterbildet.

Die Aufgabe wird gelöst durch ein Verfahren zur Unterbrechung einer Ausführung von einem Gesamtprogramm (1) eines elektronischen Steuergeräts, wobei das Gesamtprogramm (1) aufweist, ein erstes Programm (11) mit einer ersten Variablen (12), wobei das erste Programm (11) einen ersten Wert der ersten Variablen (12) in einen ersten Speicherbereich eines Speichers speichert oder den ersten Wert der ersten Variablen (12) aus dem ersten Speicherbereich des Speichers ausliest, und ein zweites Programm (21) mit einer zweiten Variablen, wobei das zweite Programm (21) den ersten Wert der ersten Variablen (12) aus dem ersten Speicherbereich des Speichers speichert oder den ersten Wert der ersten Variablen (12) aus dem ersten Speicherbereich des Speichers ausliest, um zwischen dem ersten Programm und dem zweiten Programm eine Verknüpfung herzustellen, wobei eine grafische Modellierungsumgebung (201) ausgeprägt ist, und die Modellierungsumgebung (201) grafische Modellelemente aufweist, wobei in der grafischen Modellierungsumgebung (201) das erste Programm (11) durch ein erstes Modellelement (202) repräsentiert wird, und das zweite Programm (21) durch ein zweites Modellelement (203) repräsentiert wird, und die Verknüpfung zwischen dem ersten Programm und dem zweiten Programm durch ein drittes Modellelement (205) repräsentiert wird, dadurch gekennzeichnet, dass mittels der Modellierungsumgebung (201) eine Haltebedingung (2) spezifiziert wird, wobei mittels der Haltebedingung (2) eine zur Unterbrechung der Ausführung des Gesamtprogramms (1) führende Programmzustandsänderung (3) festgelegt wird, das Gesamtprogramm (1) ausgeführt wird, während der Ausführung des Gesamtprogramms (1) eine Programmzustandsänderung (3) detektiert wird und als Programmzustandsänderung (3) angesehen wird ein Beginn und/oder Ende der Ausführung des ersten und/oder des zweiten Programms (21) und/oder ein Lese- und/oder Schreibzugriff auf den ersten Wert des ersten Speicherbereichs und/oder eine Änderung des ersten Werts des ersten Speicherbereichs, und die Ausführung des Gesamtprogramms (1) unterbrochen wird, wenn die in der Haltebedingung (2) spezifizierte Programmzustandsänderung (3) erfolgt.

Ein Vorteil der Erfindung liegt darin, dass Haltebedingung (2) innerhalb der Modellierungsumgebung (201) für die Architektur des Gesamtprogramms (1) intuitiv, schnell und einfach spezifiziert wird, womit das Gesamtprogramm (1) schnell und unkompliziert getestet werden kann. Damit wird eine hohe funktionale Sicherheit des Gesamtprogramms (1) des Steuergeräts gewährleistet, was besonders bei sicherheitskritischen Steuerungen von Kraftfahrzeugen, wie z. B. die Steuerung von Eingriffen in die Lenkung oder den Antrieb, von sehr großer Bedeutung ist.

Anhand der Unterbrechung der Ausführung des Gesamtprogramms (1), z. B. durch den Beginn der Ausführung eines Programms, wird beim Test beispielsweise festgestellt, ob, wann und in welchem Kontext ein Programm bzw. eine Einzelfunktionalität bei der Ausführung des Gesamtprogramms (1) ausgeführt wird. Des Weiteren wird durch die Unterbrechung der Ausführung des Gesamtprogramms (1) bei einem Lese- oder Schreibzugriff auf einen Wert eines Speichers ein möglicherweise unerwünschter oder unautorisierter Zugriff festgestellt.

Weiterhin liefert das erfindungsgemäße Verfahren eine effiziente und einfache Möglichkeit, um ausgehend von Architekturmodellen Fehler in der Architektur des Gesamtprogramms (1) und/oder in den Implementierungen der einzelnen Programme zu finden, und dabei die zuvor genannten Nachteile bereits bekannter Methoden zu umgehen.

Ein weiterer Vorteil des erfindungsgemäßen Verfahrens liegt darin, dass die Haltebedingungen (2) derart spezifiziert werden können, dass mehrere Programmzustandsänderungen (3) miteinander kausal und/oder temporal kombiniert werden können und die Ausführung des Gesamtprogramms (1) erst angehalten wird, wenn die Programmzustandsänderungen (3) entsprechend der Kombination eintreten. Somit kann die Programmausführung z. B. unterbrochen werden, wenn nach einer Programmzustandsänderung (3), z. B. die Ausführung eines Programms oder ein Zugriff auf einen Wert eines Speichers, eine weitere Programmzustandsänderung (3), z. B. die Ausführung eines anderen Programms oder ein Zugriff auf einen anderen Wert eines Speichers, aufgetreten ist, was als temporale Verknüpfung verstanden wird. Die Programmausführung kann auch unterbrochen werden, wenn eine Programmzustandsänderung (3) eintritt und gleichzeitig ein Wert eines Speichers einen definierten Wert annimmt, was als kausale Verknüpfung verstanden wird.

Ein bekanntes Problem beim Testen eines Gesamtprogramms (1) liegt darin, dass der Hochsprachen-Quellcode des Gesamtprogramms (1) oder von einzelnen Programmen/Funktionen nicht bekannt ist oder nicht zugänglich ist, z. B. wenn Objektcode oder verschlüsselter Code vorliegen. Bislang mussten zum Testen zuerst die Stellen im Code gefunden werden, die bestimmten Elementen im Modell entsprechen, um dort einen Haltepunkt für ein Quellcode-Debugging zu setzen. Schließlich ist der Programmcode auch meistens auf mehrere Dateien verteilt, was ein herkömmliches Quellcode-Debugging erschwert.

In einer Ausführungsform ist es bevorzugt, dass die Spezifikation der Haltebedingung (2) derart erfolgt, dass in einem ersten Schritt das erste Modellelement (202) und/oder das zweite Modellelement (203) ausgewählt wird, in einem zweiten Schritt eine Auswahl und/oder Eingabe erfolgt, wobei mit der Auswahl und/oder Eingabe spezifiziert wird, dass die Programmausführung bei dem Beginn und/oder dem Ende der Ausführung des ersten Programms (11) und/oder bei dem Beginn und/oder dem Ende der Ausführung des zweiten Programms (21) unterbrochen werden soll, und dass die Ausführung des Gesamtprogramms (1) bei einem Beginn und/oder Ende der Ausführung des ersten Programms (11) und/oder bei einem Beginn und/oder Ende der Ausführung des zweiten Programms (21) unterbrochen wird.

In einer weiteren Ausführungsform ist es bevorzugt, dass die Spezifikation der Haltebedingung (2) derart erfolgt, dass in einem ersten Schritt das dritte Modellelement (205) ausgewählt wird, in einem zweiten Schritt eine Auswahl und/oder Eingabe erfolgt, wobei mit der Auswahl und/oder Eingabe spezifiziert wird, dass die Programmausführung bei einem Lese- und/oder Schreibzugriff auf den ersten Wert des ersten Speicherbereichs und/oder bei einer Änderung des ersten Werts des ersten Speicherbereichs unterbrochen werden soll und dass die Ausführung des Gesamtprogramms (1) bei einem Lese- und/oder Schreibzugriff auf den ersten Wert des ersten Speicherbereichs und/oder bei einer Änderung des ersten Werts des ersten Speicherbereichs unterbrochen wird.

Durch die Spezifikation der Haltebedingung (2) am grafischen Modellelement entsprechend der beiden vorangegangenen Ausführungsformen wird der Konfigurationsprozess für den Test deutlich beschleunigt und intuitiv gestaltet. Dabei werden gleichzeitig Fehler vermieden, die sich durch ein manuelles Zuordnen von Programmcode-Bestandteilen zu grafischen Modellelementen ergeben können.

In einer zusätzlichen Ausführungsform wird die erste Variable (12) durch ein viertes grafisches Modellelement repräsentiert, und die Spezifikation der Haltebedingung (2) erfolgt derart, dass in einem ersten Schritt das vierte Modellelement (204) ausgewählt wird, in einem zweiten Schritt eine Auswahl und/oder Eingabe erfolgt, wobei mit der Auswahl und/oder Eingabe spezifiziert wird, dass die Programmausführung bei einem Lese- und/oder Schreibzugriff auf den ersten Wert des ersten Speicherbereichs und/oder bei einer Änderung des ersten Werts des ersten Speicherbereichs unterbrochen werden soll und dass die Ausführung des Gesamtprogramms (1) bei einem Lese- und/oder Schreibzugriff auf den ersten Wert des ersten Speicherbereichs und/oder bei einer Änderung des ersten Werts des ersten Speicherbereichs unterbrochen wird.

In der zuletzt genannten Ausführungsform enthält die Modellierungsumgebung (201) weitere grafische Modellelemente, die z. B. Variablen oder Schnittstellen von Programmen repräsentieren. An dem zusätzlichen Modellelement können Haltebedingungen (2) spezifiziert werden, die mit der durch das Modellelement repräsentierten Variablen oder Speicherbereich verknüpft sind.

In einer Ausführungsform ist es bevorzugt, dass die Modellierungsumgebung (201) eine hierarchische Baumstruktur umfasst, wobei die hierarchische Baumstruktur einen Knoten umfasst, und der Knoten das erste Programm (11) und/oder die erste Variable (12) und/oder den ersten Speicherbereich repräsentiert, wobei die Spezifikation der Haltebedingung (2) derart erfolgt, dass in einem ersten Schritt der Knoten ausgewählt wird, in einem zweiten Schritt eine Auswahl und/oder Eingabe erfolgt, wobei mit der Auswahl und/oder Eingabe spezifiziert wird, dass die Programmausführung bei dem Beginn und/oder dem Ende der Ausführung des ersten Programms (11) und/oder bei einem Lese- und/oder Schreibzugriff auf den ersten Wert des ersten Speicherbereichs und/oder bei einer Änderung des ersten Werts des ersten Speicherbereichs unterbrochen werden soll.

Eine hierarchische Baumstruktur bietet eine alternative Darstellungsform zur Repräsentation eines Programms und/oder Variablen. In der Baumstruktur sind Details der Programmarchitektur schneller zugänglich als in einer Darstellung mit grafischen Modellelementen, weshalb sich hier Vorteile durch eine schnellere und einfachere Konfiguration des Testverfahrens ergeben, wenn Haltebedingungen (2) in der hierarchischen Baumstruktur spezifiziert werden.

In einer anderen Ausführungsform ist es bevorzugt, dass das erste Programm (11) ein Unterprogramm und/oder eine Funktion umfasst, und ein Beginn und/oder Ende der Ausführung des Unterprogramms und/oder ein Beginn und/oder Ende der Ausführung der Funktion als Programmzustandsänderung (3) angesehen wird, und die Ausführung des Gesamtprogramms (1) bei einem Beginn und/oder Ende der Ausführung des Unterprogramms und/oder bei einem Beginn und/oder Ende der Ausführung der Funktion unterbrochen wird.

In einer alternativen Ausführungsform wird das Gesamtprogramm (1) mittels der grafischen Modellierungsumgebung (201) entsprechend der Spezifikationen des AUTOSAR-Standards modelliert, wobei ein Programmcode des Gesamtprogramms (1) und/oder ein Programmcode des ersten Programms (11) vorliegt, wobei der Programmcode zumindest teilweise die Spezifikationen des AUTOSAR-Standards erfüllt, und das erste Modellelement (202) und/oder das zweite Modellelement (203) und/oder das dritte Modellelement (205) und/oder das vierte Modellelement (204) einen Bestandteil des Programmcodes des Gesamtprogramms (1) und/oder einen Bestandteil des Programmcodes des ersten Programms (11) repräsentiert.

Eine weitere Ausführungsform ist derart ausgeprägt, dass der AUTOSAR-Standard ein RTE-Ereignis definiert und das RTE-Ereignis als Programmzustandsänderung (3) angesehen wird und die Ausführung des Gesamtprogramms (1) unterbrochen wird, wenn das RTE-Ereignis eintritt.

Die Verwendung von AUTOSAR-konformen Spezifikationen für die Architektur ergibt den Vorteil, dass hierdurch eine effiziente Zuordnung von grafischen Modellelementen zu Bestandteilen des Programmcodes des Gesamtprogramms (1) ermöglicht wird. Dies geschieht über Symbole, die durch den Standard festgelegt werden, und mit dem Auftreten der Programmzustandsänderungen (3) zusammenhängen. Ein Symbol ist dabei eine benannte Entität innerhalb eines Programms. Die Symbole einer ausführbaren Programmeinheit stellen die für einen Compiler/Linker über den Namen sichtbaren Variablen und Funktionen dar. Die Variablen und Funktionen bilden auf die jeweiligen Bezeichner, also Variablen und Funktionsdefinitionen, im Quellcode, aus dem die ausführbare Programmeinheit hervorgegangen ist, ab. Im AUTOSAR-Standard folgt die Benennung der Funktionen nach festgelegten Namensschemen. Beispielsweise ist der Name für einen expliziten Lesezugriff über die AUTOSAR Laufzeitumgebung, welche auch unter der Abkürzung RTE bekannt ist, wie folgt aufgebaut: "Rte_Read_<p>_<o>", wobei <p> stellvertretend für den Namen des Ports und <o> für den Namen des Variablen-Prototypen, also der Name des Containers des zu lesenden Werts, innerhalb des Sender-Receiver Interfaces steht, welches den Port kategorisiert. Die Symbole können überwacht werden, d. h. eine Änderung oder ein Aufruf kann detektiert werden.

In einer anderen Ausführungsform ist ein Quellcode-Debugger vorgesehen, und die Ausführung des Gesamtprogramms (1) und die Detektion der Programmzustandsänderung (3) werden mittels des Quellcode-Debuggers derart durchgeführt, dass mittels der Haltebedingung (2) ein Haltepunkt im Quellcode ermittelt wird und der Haltepunkt an den Quellcode-Debugger übermittelt wird.

Die Verwendung eines Quellcode-Debuggers bringt zum einen den Vorteil, dass hier bereits bestehende Mechanismen zur Detektion und Unterbrechung der Programmausführung verwendet werden können. Ein weiterer Vorteil bei der Verwendung eines Quellcode-Debuggers liegt darin, dass der Quellcode der Programme und/oder des Gesamtprogramms (1) nicht modifiziert werden muss.

Eine zusätzliche Ausführungsform ist derart ausgeprägt, dass der Bestandteil des Programmcodes des Gesamtprogramms (1) und/oder der Bestandteils des Programmcodes des ersten Programms (11) eine eindeutige Position innerhalb des Programmcodes einnimmt, die Position ermittelt wird, und eine Programmanweisung zur Detektion der Programmzustandsänderung (3) und/oder Unterbrechung der Ausführung des Gesamtprogramms (1) vor und/oder nach der Position eingefügt wird, oder der Bestandteil des Programmcodes durch eine Programmanweisung zur Detektion der Programmzustandsänderung (3) und/oder Unterbrechung der Ausführung des Gesamtprogramms (1) ersetzt wird.

Die zuletzt genannte Ausführungsform hat den Vorteil, dass dieses Verfahren im Falle einer Ausführung des Gesamtprogramms (1) mittels einer Simulation des Prozessor-Befehlssatzes durchgeführt werden kann.

Gemäß einer anderen Weiterbildung erfolgt das Verfahren derart, dass der Bestandteil des Programmcodes des Gesamtprogramms (1) und/oder der Bestandteils des Programmcodes des ersten Programms (11) eine eindeutige Position innerhalb des Programmcodes einnimmt, die Position ermittelt wird, und ein Programmcode-Abschnitt des Gesamtprogramms (1) und/oder Programms angezeigt wird, wobei der Programmcode-Abschnitt den Bestandteil enthält und die in der Haltebedingung (2) spezifizierte Programmzustandsänderung (3) durch den Bestandteil erfolgt.

Hierdurch kann schnell erkannt werden, welcher Quellcode-Abschnitt für das Eintreten einer Haltebedingung (2) verantwortlich ist.

Gemäß einer anderen Weiterbildung wird die Programmzustandsänderung (3) in einer zeitlich geordneten Datenbasis gespeichert, wenn sie nicht zu einer Unterbrechung der Programmausführung führt.

Hierdurch ist es möglich, die zeitliche Entwicklung der Ausführung des Gesamtprogramms (1) zu inspizieren. So lässt sich erkennen, zu welchem relativen oder absoluten Zeitpunkt ein Programm gestartet und beendet wurde, und auf welche Speicherbereiche die Programme zugegriffen haben. Weiterhin werden Änderungen und konkrete Werte von Speicherbereichen dargestellt.

In einer anderen Ausführungsform wird eine Modifizierung des ersten Werts der ersten Variablen (12) aus dem ersten Speicherbereich vorgenommen. Die Modifizierung wird nach der Unterbrechung der Ausführung des Gesamtprogramms (1) durchgeführt. Nach der Modifizierung wird die Ausführung des Gesamtprogramms (1) fortgesetzt.

Die Erfindung wird nachfolgend unter Bezugnahme auf die Zeichnungen näher erläutert. Hierbei werden gleichartige Teile mit identischen Bezeichnungen beschriftet. Darin zeigt:
- Figur 1: eine Ausführungsform des Ablaufs eines erfindungsgemäßen Verfahrens,
- Figur 2: eine schematische Ansicht auf eine erfindungsgemäße Ausführungsform einer grafischen Modellierungsumgebung,
- Figur 3: eine Ausführungsform einer hierarchischen Baumstruktur.

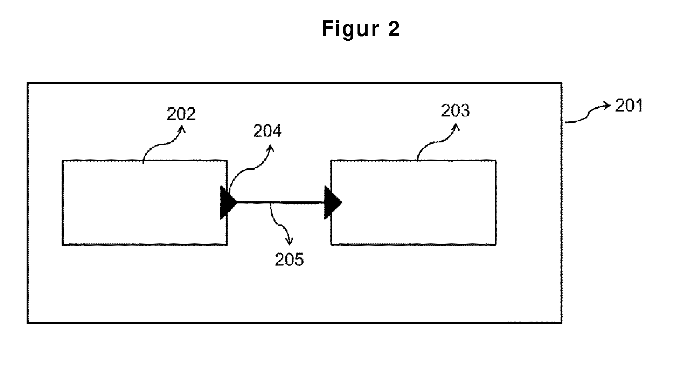

Figur 2 zeigt schematisch eine mögliche Ausführungsform einer grafischen Modellierungsumgebung (201) für die Architektur eines Gesamtprogramms (1), die aus dem Stand der Technik bekannt ist. Die Figur 2 enthält eine grafische Modellierungsumgebung (201), ein erstes Modellelement (202), ein zweites Modellelement (203), ein drittes Modellelement (205) und ein viertes Modellelement (204).

Das Gesamtprogramm (1) besteht in dieser Ausführungsform aus einem ersten Programm und einem zweiten Programm, wobei das erste Programm (11) durch ein erstes Modellelement (202) (202) und das zweite Programm (21) durch ein zweites Modellelement (203) (203) repräsentiert werden. Die Programme sind untereinander beispielsweise derart verknüpft, dass das erste Programm (11) einen ersten Wert einer ersten Variablen (12) in einen ersten Speicherbereich eines Speichers speichert, und ein zweites Programm (21) mit einer zweiten Variablen, den ersten Wert der ersten Variablen (12) aus dem ersten Speicherbereich des Speichers ausliest. Diese Verknüpfung wird in der grafischen Modellierungsumgebung (201) durch ein drittes Modellelement (205) repräsentiert. In der dargestellten Ausführungsform wird die erste Variable (12) durch ein viertes grafisches Modellelement (204) repräsentiert.

Mit Hilfe einer Modellierungsumgebung, wie Sie in Figur 2 dargestellt ist, können auf Architekturebene die Einzelfunktionalitäten von Programmen in Komponenten eines Gesamtprogramms (1) integriert werden sowie die Kommunikation zwischen diesen definiert werden. Weiterhin können Anforderungen und Bezeichnungen der verschiedenen Programmkomponenten und Variablen des Gesamtprogramms (1) definiert werden.

Eine Architektur eines Gesamtprogramms (1) beschreibt die grundlegenden Komponenten und deren Zusammenspiel innerhalb eines Gesamtprogramms (1), wobei das Gesamtprogramm (1) aus mindestens einem Programm bzw. mindestens einer Einzelfunktionalität besteht. Die Architektur kann Informationen über die Struktur und Komponentisierung eines Gesamtprogramms (1), aber auch Informationen über die Kommunikation zwischen Komponenten, sowie deren Abbildung auf Hardware- oder Software-Ressourcen enthalten.

Zur Entwicklung der Programmarchitektur werden häufig grafische Modellierungsumgebungen verwendet. Hier können die jeweiligen Programme oder Teile von Programmen, und deren Verbindungen sowie andere Elemente der Architektur durch grafische Modellelemente, wie beispielsweise Blöcke und Linien, repräsentiert werden. Dies gestaltet die Entwicklungsprozedur einfach und intuitiv. Die Verbindungslinien kennzeichnen in der Regel die Übertragung oder Anforderung von Daten, d. h. Werten von Speicherbereichen. Übertragene Daten können Programmzustandsänderungen (3) auslösen, wie z. B. die Ausführung eines Programms oder eines Teils eines Programms, das im Modell durch einen Block dargestellt sein kann. Programmzustandsänderungen (3) können aber auch anders ausgelöst werden, wie z. B. durch zeitliche Triggerung. Eine Übertragung oder eine Änderung von Daten kann ebenfalls als Programmzustandsänderung (3) gelten.

Nachdem die Architektur definiert und spezifiziert wurde, können die Beschreibungen der Komponenten inklusive ihrer Kommunikationsschnittstelle an die jeweiligen Funktions-entwickler weitergegeben werden, damit diese die Funktionalitäten der Programme implementieren können. Nachdem dieser Schritt vollzogen wurde, können die Implementierungen bzw. Programme zurück an den Architekturentwickler bzw. Softwareintegrator gegeben werden, wobei die Implementierungen in der Modellierungsumgebung (201) zusammengefügt werden und ein Gesamtprogramm (1) erzeugt werden kann.

Insbesondere bei der Entwicklung des Gesamtprogramms (1) eines elektronischen Steuergeräts kann es zu Steuergeräte-typischen Fehlern kommen. Diese resultieren aus den Besonderheiten der Architektur eines Gesamtprogramms (1) eines Steuergeräts: Bei einem Gesamtprogramm (1) eines Steuergeräts können die einzelnen Programme innerhalb einer Laufzeitumgebung ausgeführt werden, die über ein Steuergeräte-Betriebssystem mittels verschiedener Treiber und Services an die Hardware und daran angebundene I/O-Funktionalitäten oder Kommunikationssysteme des Steuergeräts gekoppelt sein kann. Die Verbindung aller Komponenten der Software eines Steuergeräts kann über Schnittstellen hergestellt werden. Eine weitere Besonderheit in der Architektur von Steuergeräte-Programmen liegt darin, dass miteinander verbundene Programme eines Gesamtprogramms (1) auf verschiedenen Steuergeräten ausgeführt werden können, ohne dass die Programme an das jeweilige Steuergerät angepasst werden müssen.

Eine wichtige Fehlerquelle bei der Entwicklung des Gesamtprogramms (1) eines elektronischen Steuergeräts liegt in der Verteilung des Systems. Im Gegensatz zu einem herkömmlichen Programm weist ein Gesamtprogramm (1) eines elektronischen Steuergeräts viele Einzelfunktionalitäten bzw. Programme auf, die z. B. über einen Bus (z. B. CAN, Flexray, etc.) kommunizieren. Dies ist in der Regel für einen Entwickler schwer zu überblicken.

Eine weitere Fehlerquelle bei der Entwicklung des Gesamtprogramms (1) eines elektronischen Steuergeräts liegt an der Verteilung der Entwicklung und den damit verbundenen möglichen Fehlern bei der Weitergabe der Daten, z .B. falsche Versionen oder falsche Compiler-Flags, sowie den mit der Entwicklung im Zusammenhang stehenden komplexen Werkzeugketten.

Sowohl beim Modellieren und Integrieren einer Architektur, als auch bei der Entwicklung der Programme oder Teile der Programme, kann es daher insbesondere bei Programmen und Architekturen für elektronische Steuergeräte zu unterschiedlichen Fehlern kommen. Diese können bei einem simulationsbasierten Testen und Experimentieren festgestellt werden. Außerdem können beim Zusammenspiel der Programme im Gesamtprogramm (1) auch Implementierungs- und Designfehler einzelner Programme auftreten, die im Unit- oder Modultest, welche die Funktionalität eines isolierten Programms testen, nicht aufgetreten sind. Tritt ein Fehler auf, muss die Fehlerursache gefunden werden, die sich oft nicht da befindet, wo der Fehler zuerst sichtbar wird, z. B. im Plot einer Messvariablen beim Experimentieren oder beim automatischen Test auf einen bestimmten Wert.

Die Fehler können verschiedener Art sein. So liegt eine Fehlerquelle darin, dass die im Architekturmodell angegebenen Vorgaben nicht oder nur teilweise in den Implementierungen der Programme umgesetzt wurden. Das kann sich dann z. B. darin manifestieren, dass bestimmte Programme in Datenbereiche schreiben, auf die sie laut dem Architekturmodell keinen Zugriff haben sollten, wodurch sie Daten illegal beeinflussen und verändern können.

Um die Fehler aufzufinden wird üblicherweise ein simulationsbasiertes Testverfahren verwendet. Dazu wird in der Regel der dem Gesamtprogramm (1) zugrunde liegende Quellcode (bzw. notwendige Quellcode-Dateien zu Softwarekomponenten, Programmen, Laufzeitumgebung, Steuergeräte-Betriebssystem, Services, Treiber, etc.) oder Teile davon kompiliert, gelinkt und das sich daraus ergebende Gesamtprogramm (1) wird anschließend ausgeführt. Diese Ausführung kann dabei entweder direkt auf dem Steuergerät erfolgen oder als virtuelles Steuergerät in einer Offline-Simulation. Bei einer Offline Simulation ist der Simulator nicht an ein physikalisches Steuergerät angeschlossen und damit unabhängig von der Echtzeit.

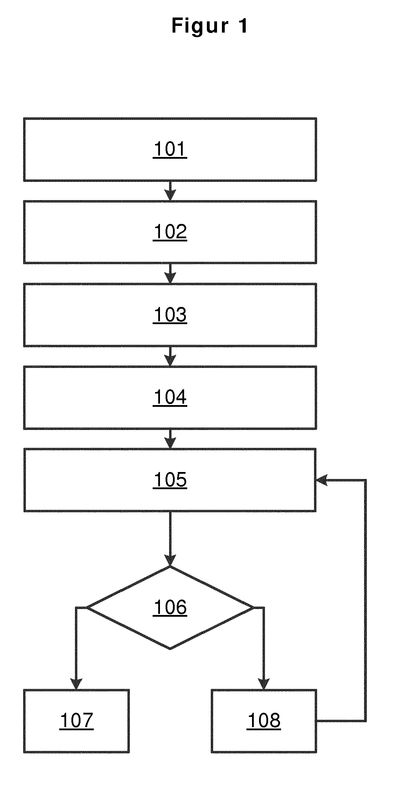

Figur 1 stellt eine Ausführungsform des Ablaufs eines erfindungsgemäßen Verfahrens dar, wobei ein erster Schritt (101), ein zweiter Schritt (102), ein dritter Schritt (103), ein vierter Schritt (104), ein fünfter Schritt (105), ein sechster Schritt (106), ein siebter Schritt (107) und/oder ein achter Schritt (108) durchgeführt werden.

Im ersten Schritt (101) wird mittels einer grafischen Modellierungsumgebung (201) eine Haltebedingung (2) spezifiziert, wobei mittels der Haltebedingung (2) eine zur Unterbrechung der Ausführung des Gesamtprogramms (1) führende Programmzustandsänderung (3) festgelegt wird.

In einer Ausführungsform ist es bei diesem Schritt bevorzugt, dass die Spezifikation der Haltebedingung (2) derart erfolgt, dass in einem ersten Schritt das erste Modellelement (202) und/oder das zweite Modellelement (203) ausgewählt wird, in einem zweiten Schritt eine Auswahl und/oder Eingabe erfolgt, wobei mit der Auswahl und/oder Eingabe spezifiziert wird, dass die Programmausführung bei dem Beginn und/oder dem Ende der Ausführung des ersten Programms (11) und/oder bei dem Beginn und/oder dem Ende der Ausführung des zweiten Programms (21) unterbrochen werden soll, und dass die Ausführung des Gesamtprogramms (1) bei einem Beginn und/oder Ende der Ausführung des ersten Programms (11) und/oder bei einem Beginn und/oder Ende der Ausführung des zweiten Programms (21) unterbrochen wird.

In einer weiteren Ausführungsform ist es bei diesem Schritt bevorzugt, dass die Spezifikation der Haltebedingung (2) derart erfolgt, dass in einem ersten Schritt das dritte Modellelement (205) ausgewählt wird, in einem zweiten Schritt eine Auswahl und/oder Eingabe erfolgt, wobei mit der Auswahl und/oder Eingabe spezifiziert wird, dass die Programmausführung bei einem Lese- und/oder Schreibzugriff auf den ersten Wert des ersten Speicherbereichs und/oder bei einer Änderung des ersten Werts des ersten Speicherbereichs unterbrochen werden soll und dass die Ausführung des Gesamtprogramms (1) bei einem Lese- und/oder Schreibzugriff auf den ersten Wert des ersten Speicherbereichs und/oder bei einer Änderung des ersten Werts des ersten Speicherbereichs unterbrochen wird.

Die Auswahl des jeweiligen Modellelements kann z. B. durch einen Mausklick auf ein Modellelement erfolgen. Die Auswahl und/oder Eingabe kann auch mittels einer Liste erfolgen, wobei in der Liste mehrere Modellelemente zur Auswahl stehen. Die Auswahl und/oder Eingabe kann auch mittels einer textuellen Angabe eines Bezeichners eines Modellelements erfolgen. Eine mögliche Realisierung sieht vor, dass in Folge eines Mausklicks auf ein Modellelement zur Repräsentierung des ersten Programms (11) ein Kontextmenü erscheint, wobei in dem Kontextmenü angegeben wird, dass hier eine Haltebedingung (2) spezifiziert werden soll, woraufhin in einem weiteren Schritt angegeben wird, dass die Ausführung des Gesamtprogramms (1) bei einem Beginn der Ausführung des ersten Programms (11) unterbrochen werden soll. Eine weitere Möglichkeit zur Spezifikation der Haltebedingung (2) ist eine textuelle Angabe der Form "erstes Programm = Beginn".

Eine weitere Form zur Spezifizierung der Haltebedingung (2) liegt darin, dass RTE-Ereignisse, die durch den AUTOSAR-Standard definiert werden, als Programmzustandsänderungen (3) angesehen werden, bei denen die Ausführung des Gesamtprogramms (1) unterbrochen werden soll. Ein RTE-Ereignis kann gemäß der AUTOSAR-Spezifikation, die unter www.autosar.org angegeben ist, z. B. ein sogenanntes *TimingEvent, BackgroundEvent, DataReceivedEvent, DataWriteCompletedEvent, OperationInvokedEvent* oder *InternalTriggerOccurredEvent* sein.

Die möglichen Haltebedingungen (2) können von der Art des Modellelements abhängen. Mögliche Haltebedingungen (2), die am Modellelement definiert werden können, sind beispielsweise der Start oder die Terminierung des Programms, oder Start und Terminierung von Unterprogrammen, Funktionen, Runnables oder Tasks des Programms.

Eine mögliche Ausführungsform der Definition einer Haltebedingung (2) kann darin liegen, dass sich durch einen Mausklick auf ein Modellelement ein Menü öffnet, in welchem die Belegung mit einer Haltebedingung (2) ausgewählt werden kann. Weiterhin kann sich ein zusätzliches Fenster öffnen, in dem weitere Parameter für die Haltebedingung (2) angegeben werden können.

In einer möglichen Ausführungsform kann durch einen Mausklick auf ein Modellelement, z. B. Programmkomponente, Port oder Verbindungslinie, eine Eingabe erhalten werden, beispielsweise unter der Zuhilfenahme eines Menüs, womit eine Haltebedingung (2) spezifisch für das jeweilige Modellelement definiert wird. Weiterhin kann eine Auswahl an möglichen Programmzustandsänderungen (3) und Speicherbereichen, die mit dem jeweiligen Element verbunden sind, vorgegeben werden. Anschließend können eine oder mehrere Programmzustandsänderungen (3) und/oder Speicherbereiche mit Haltebedingungen (2) belegt werden.

Im zweiten Schritt (102) einer möglichen Ausführungsform des erfindungsgemäßen Verfahrens erfolgt eine Abbildung der grafischen Modellelemente auf entsprechende Stellen im Programmcode des Gesamtprogramms (1) oder der Programme.

Als Programmcode kann z. B. angesehen werden ein Maschinencode, ein Binärcode, ein Assembler-Code, ein Quellcode, ein Zwischencode oder ein Quelltext.

Für die Abbildung können Informationen aus der Programmarchitektur verwendet werden, wobei die Abbildung sehr effizient durchgeführt werden kann, wenn die Architektur einer vorgegebenen Spezifikation genügt. Die Spezifikation kann z. B. durch den AUTOSAR-Standard vorgegeben sein. Die Spezifikation der Architektur kann Regeln für die Benennung der Programme, Unterprogramme, Tasks, Datenelemente, Funktionen, Runnables, und/oder Variablen vorgeben.

Die Abbildung, das heißt eine Ermittlung der Stellen im Programmcode, die durch grafische Modellelemente repräsentiert werden, wird dadurch ermöglicht, dass das Gesamtprogramm (1) mittels der grafischen Modellierungsumgebung (201) entsprechend der Spezifikationen des AUTOSAR-Standards modelliert wird, und ein Programmcode des Gesamtprogramms (1) und/oder ein Programmcode des ersten Programms (11) vorliegt, wobei der Programmcode zumindest teilweise die Spezifikationen des AUTOSAR-Standards erfüllt, und das erste Modellelement (202) und/oder das zweite Modellelement (203) und/oder das dritte Modellelement (205) und/oder das vierte Modellelement (204) einen Bestandteil des Programmcodes des Gesamtprogramms (1) und/oder einen Bestandteil des Programmcodes des ersten Programms (11) repräsentiert.

Die Abbildung erfolgt in einer Ausführungsform mittels einer Ermittlung der Position eines Bestandteils des Programmcodes des Gesamtprogramms (1) und/oder der Bestandteils des Programmcodes des ersten Programms (11), wobei der Bestandteil des Programmcodes das erste Modellelement (202) und/oder das zweite Modellelement (203) und/oder das dritte Modellelement (205) und/oder das vierte Modellelement (204) repräsentiert. Der Bestandteil kann z. B. ein Befehl sein, mit dem eine Ausführung des ersten Programms (11) initiiert wird oder ein Speicherzugriff auf einen Speicherbereich initiiert wird.

Im dritten Schritt (103) einer möglichen Ausführungsform des erfindungsgemäßen Verfahrens erfolgt eine Ermittlung von Haltepunkten im Programmcode und eine Übermittlung der Haltepunkte an einen Quellcode-Debugger, wie z. B. dem Programm "GNU Debugger". Als Haltepunkt wird eine bestimmte Stelle im Programmcode verstanden, wobei an der Stelle ein Befehl ausgeführt wird, und nach oder vor dem Befehl die Programmausführung angehalten werden soll. In einer Ausführungsform werden Haltepunkte für alle Stellen im Programmcode an den Quellcode-Debugger übertragen, die mit einem grafischen Modellelement verknüpft sind. In einer anderen Ausführungsform werden nur die Stellen im Programmcode an den Quellcode-Debugger übertragen, an denen ein Befehl ausgeführt wird, und der Befehl mit einem grafischen Modellelement verknüpft ist, wobei für das jeweilige grafische Modellelement eine Haltebedingung (2) spezifiziert wurde. Eine Verknüpfung eines Befehls mit einem grafischen Modellelement ist z. B. dadurch gegeben, dass durch den Befehl die Ausführung eines Programms initiiert wird, wobei das Programm durch ein grafisches Modellelement repräsentiert wird, oder dass durch den Befehl ein Speicherzugriff auf einen Speicherbereich initiiert wird, und dem Speicherbereich Variablen zugeordnet sind, wobei die Variablen durch ein grafisches Modellelement repräsentiert werden.

In einer alternativen Ausführungsform des erfindungsgemäßen Verfahrens erfolgt im dritten Schritt (103), dass eine Programmanweisung zur Detektion der Programmzustandsänderung (3) und/oder Unterbrechung der Ausführung des Gesamtprogramms (1) vor und/oder nach der Position des Bestandteils des Programmcodes eingefügt wird, oder der Bestandteil des Programmcodes durch eine Programmanweisung zur Detektion der Programmzustandsänderung (3) und/oder Unterbrechung der Ausführung des Gesamtprogramms (1) ersetzt wird. Durch die Programmanweisung werden z. B. Zieladressen im Assembler-Code oder Binär-Code des Programms oder des Gesamtprogramms (1) umgeleitet. In einer anderen Ausführungsform werden durch die Programmanweisungen zusätzliche Funktionen aufgerufen, die Mechanismen zur Detektion und Unterbrechung der Programmausführung enthalten.

Im vierten Schritt (104) einer möglichen Ausführungsform des erfindungsgemäßen Verfahrens erfolgt ein Beginn der Ausführung des Gesamtprogramms (1). Dieser Schritt umfasst in einer Ausführungsform, dass anhand der Kommunikation des ersten Programms (11) mit dem zweiten Programm, die mit der Modellierungsumgebung (201) beschrieben wird, ein ausführbares Gesamtprogramm (1) erzeugt wird, z. B. durch eine Kompilierung und Verlinkung. Dieser Schritt umfasst in einer Ausführungsform auch die Erzeugung einer Laufzeitumgebung, im Rahmen der AUTOSAR-Spezifikation bekannt als RTE, wobei die Laufzeitumgebung als Teil des Gesamtprogramms (1) aufgefasst wird.

In einer erfindungsgemäßen Ausführungsform wird der dem Gesamtprogramm (1) zugrunde liegende Quellcode, also Quellcode-Dateien zu Softwarekomponenten, Laufzeitumgebung, Steuergeräte-Betriebssystem, Services, Treiber, oder ähnliches, oder Teile davon kompiliert, gelinkt und das sich daraus ergebende Gesamtprogramm (1) wird anschließend ausgeführt. Diese Ausführung kann dabei entweder direkt auf dem Steuergerät erfolgen oder als virtuelles Steuergerät in einer Offline-Simulation.

Im fünften Schritt (105) einer möglichen Ausführungsform des erfindungsgemäßen Verfahrens werden während der Ausführung des Gesamtprogramms (1) Programmzustandsänderungen (3) detektiert, wobei als Programmzustandsänderung (3) angesehen wird ein Beginn und/oder Ende der Ausführung des ersten und/oder des zweiten Programms (21) und/oder ein Lese- und/oder Schreibzugriff auf den ersten Wert des ersten Speicherbereichs und/oder eine Änderung des ersten Werts des ersten Speicherbereichs. In einer Ausführungsform erfolgen die Detektionen dabei mittels der im dritten Schritt (103) beschriebenen Vorgehensweisen, also mittels eines Quellcode-Debuggers oder mittels dem Programmcode hinzugefügter Programmanweisungen. In einer alternativen Ausführungsform werden die Detektionen mittels einer Simulationsumgebung durchgeführt, wobei die Simulationsumgebung die Ausführung des Gesamtprogramms (1) steuert und überwacht. Eine weitere mögliche Ausführungsform sieht eine Simulation des Prozessor-Befehlssatzes eines Ziel-Steuergerätes vor, welche zur Detektion verwendet wird. Eine Verwendung von Hook-Funktionen, mit denen die Detektionen durchgeführt werden können, stellt eine zusätzliche erfindungsgemäße Ausführungsform dar.

Im sechsten Schritt (106) einer möglichen Ausführungsform des erfindungsgemäßen Verfahrens erfolgt nach einer detektierten Programmzustandsänderung (3) eine Überprüfung, ob die detektierte Programmzustandsänderung (3) zu einer Unterbrechung der Programmausführung führen soll.

Bei einer positiven Überprüfung im sechsten Schritt (106) erfolgt im siebten Schritt (107) einer möglichen Ausführungsform des erfindungsgemäßen Verfahrens eine Unterbrechung der Programmausführung.

Bei einer negativen Überprüfung im sechsten Schritt (106) erfolgt im achten Schritt (108) einer möglichen Ausführungsform des erfindungsgemäßen Verfahrens eine Fortführung der Detektionen der Programmzustandsänderungen (3).

In einer Ausführungsform der Erfindung wird nach der Unterbrechung der Ausführung des Gesamtprogramms (1) ein Quellcode-Abschnitt angezeigt, wobei der Quellcode-Abschnitt dem Eintreten der Haltebedingung (2) zugeordnet ist.

In einer weiteren erfindungsgemäßen Ausführungsform wird bei unterbrochener Programmausführung ein Wert einer Variablen in einem Speicherbereich oder eine Haltebedingung (2) modifiziert und anschließend die Ausführung des Gesamtprogramms (1) fortgeführt.

Eine erfindungsgemäße Ausführungsform kann weiterhin umfassen, dass nach einem detektierten Ereignis die Detektionen in einer tabellarischen Darstellung zeitlich geordnet gespeichert werden und/oder der Wert der ersten Variablen (12) und/oder der Wert der zweiten Variablen und/oder der Beginn, die Ausführung oder das Ende des ersten Programms (11) und/oder der Beginn, die Ausführung oder das Ende des zweiten Programms (21) in der grafischen Modellierungsumgebung (201) grafisch angezeigt werden. Die tabellarische Darstellung wird in einer Ausführungsform nach jeder Detektion aktualisiert und enthält weitere Attribute, wie zum Beispiel die Wertbelegungen von Speicherbereichen. Hier werden beispielsweise Starts und Terminierungen von Programmen oder Programmteilen sowie Lese- und Schreibzugriffe auf Werte von Speicherbereichen gespeichert und angezeigt.

In einer Ausführungsform können während der Ausführung des Gesamtprogramms (1) oder während der unterbrochenen Ausführung des Gesamtprogramms (1) der Wert der ersten Variablen (12) und/oder der Wert der zweiten Variablen und/oder der Beginn, die Ausführung oder das Ende des ersten Programms (11) und/oder der Beginn, die Ausführung oder das Ende des zweiten Programms (21) in der grafischen Modellierungsumgebung (201) angezeigt werden. Das kann derart ausgeprägt sein, dass beim Auftreten von Programmzustandsänderungen (3) wie z. B. Programmstarts oder -Terminierungen, oder Zugriffe auf oder Änderungen von Speicherbereichen, die jeweiligen Modellelemente betont werden, beispielsweise in der Form eines Farbwechsels oder einer Animation. Weiterhin können aktuelle Werte von Speicherbereichen in der Nähe eines Modellelements grafisch dargestellt werden.

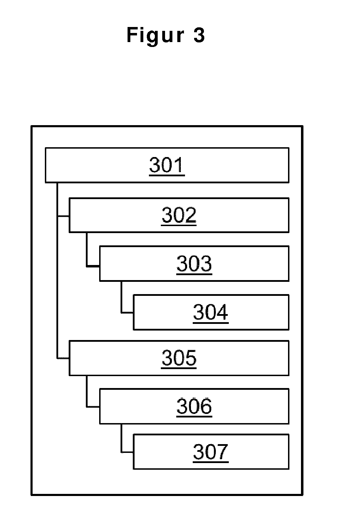

Figur 3 stellt eine mögliche Ausführungsform einer hierarchischen Baumstruktur dar, wobei die hierarchische Baumstruktur in dieser Ausführungsform 7 Knoten umfasst, und der erste Knoten (301) das Gesamtprogramm (1) repräsentiert, der zweite Knoten (302) das erste Programm (11) repräsentiert, der dritte Knoten (303) die erste Variable (12) repräsentiert, der vierte Knoten (304) den ersten Speicherbereich repräsentiert, der fünfte Knoten (305) das zweite Programm (21) repräsentiert, der sechste Knoten (306) die zweite Variable repräsentiert und der siebte Knoten (307) den ersten Speicherbereich repräsentiert. In einer Ausführungsform erfolgt die Spezifikation der Haltebedingung (2) derart, dass in einem ersten Schritt der zweite Knoten (302) ausgewählt wird, und in einem zweiten Schritt eine Auswahl und/oder Eingabe erfolgt, wobei mit der Auswahl und/oder Eingabe spezifiziert wird, dass die Programmausführung bei dem Beginn und/oder dem Ende der Ausführung des ersten Programms (11) unterbrochen werden soll.

## Patentansprüche

1. Verfahren zur Unterbrechung einer Ausführung von einem Gesamtprogramm (1) eines elektronischen Steuergeräts,
wobei das Gesamtprogramm (1) aufweist,
ein erstes Programm (11) mit einer ersten Variablen (12), wobei das erste Programm (11) einen ersten Wert (13) der ersten Variablen (12) in einen ersten Speicherbereich (14) eines Speichers speichert oder den ersten Wert der ersten Variablen (12) aus dem ersten Speicherbereich des Speichers ausliest, und
ein zweites Programm (21) mit einer zweiten Variablen (22), wobei das zweite Programm (21) den ersten Wert (13) der ersten Variablen (12) aus dem ersten Speicherbereich (14) des Speichers speichert oder den ersten Wert (13) der ersten Variablen (12) aus dem ersten Speicherbereich (14) des Speichers ausliest, um zwischen dem ersten Programm (11) und dem zweiten Programm (21) eine Verknüpfung herzustellen,
wobei eine grafische Modellierungsumgebung (201) ausgeprägt ist, und die Modellierungsumgebung (201) grafische Modellelemente aufweist, wobei in der grafischen Modellierungsumgebung (201) das erste Programm (11) durch ein erstes Modellelement (202) repräsentiert wird, und das zweite Programm (21) durch ein zweites Modellelement (203) repräsentiert wird, und die Verknüpfung zwischen dem ersten Programm und dem zweiten Programm durch ein drittes Modellelement (205) repräsentiert wird
**dadurch gekennzeichnet, dass**
mittels der Modellierungsumgebung (201) eine Haltebedingung (2) spezifiziert wird, wobei mittels der Haltebedingung (2) eine zur Unterbrechung der Ausführung des Gesamtprogramms (1) führende Programmzustandsänderung (3) festgelegt wird,
das Gesamtprogramm (1) ausgeführt wird,
während der Ausführung des Gesamtprogramms (1) eine Programmzustandsänderung (3) detektiert wird und als Programmzustandsänderung (3) angesehen wird
ein Beginn und/oder Ende der Ausführung des ersten Programms (11) und/oder des zweiten Programms (21) und/oder
ein Lese- und/oder Schreibzugriff auf den ersten Wert des ersten Speicherbereichs und/oder
eine Änderung des ersten Werts des ersten Speicherbereichs, und
die Ausführung des Gesamtprogramms (1) unterbrochen wird, wenn die in der Haltebedingung (2) spezifizierte Programmzustandsänderung (3) erfolgt.

2. Verfahren nach Anspruch 1, wobei die Spezifikation der Haltebedingung (2) derart erfolgt, dass
in einem ersten Schritt das erste Modellelement (202) und/oder das zweite Modellelement (203) ausgewählt wird,
in einem zweiten Schritt eine Auswahl und/oder Eingabe erfolgt, wobei mit der Auswahl und/oder Eingabe spezifiziert wird, dass die Programmausführung
bei dem Beginn und/oder dem Ende der Ausführung des ersten Programms (11) und/oder
bei dem Beginn und/oder dem Ende der Ausführung des zweiten Programms (21)
unterbrochen werden soll, und dass
die Ausführung des Gesamtprogramms (1) bei einem Beginn und/oder Ende der Ausführung des ersten Programms (11) und/oder bei einem Beginn und/oder Ende der Ausführung des zweiten Programms (21) unterbrochen wird.

3. Verfahren nach Anspruch 1, wobei die Spezifikation der Haltebedingung (2) derart erfolgt, dass
in einem ersten Schritt das dritte Modellelement (205) ausgewählt wird,
in einem zweiten Schritt eine Auswahl und/oder Eingabe erfolgt, wobei mit der Auswahl und/oder Eingabe spezifiziert wird, dass die Programmausführung
bei einem Lese- und/oder Schreibzugriff auf den ersten Wert des ersten Speicherbereichs und/oder bei einer Änderung des ersten Werts des ersten Speicherbereichs
unterbrochen werden soll und dass
die Ausführung des Gesamtprogramms (1) bei einem
Lese- und/oder Schreibzugriff auf den ersten Wert des ersten Speicherbereichs und/oder
bei einer Änderung des ersten Werts des ersten Speicherbereichs
unterbrochen wird.

4. Verfahren nach Anspruch 1, wobei die erste Variable (12) durch ein viertes grafisches Modellelement repräsentiert wird, und die Spezifikation der Haltebedingung (2) derart erfolgt, dass
in einem ersten Schritt das vierte Modellelement (204) ausgewählt wird,
in einem zweiten Schritt eine Auswahl und/oder Eingabe erfolgt, wobei mit der Auswahl und/oder Eingabe spezifiziert wird, dass die Programmausführung
bei einem Lese- und/oder Schreibzugriff auf den ersten Wert des ersten Speicherbereichs und/oder bei einer Änderung des ersten Werts des ersten Speicherbereichs
unterbrochen werden soll und dass
die Ausführung des Gesamtprogramms (1) bei einem
Lese- und/oder Schreibzugriff auf den ersten Wert des ersten Speicherbereichs und/oder
bei einer Änderung des ersten Werts des ersten Speicherbereichs
unterbrochen wird.

5. Verfahren nach Anspruch 1, wobei die Modellierungsumgebung (201) eine hierarchische Baumstruktur umfasst, wobei die hierarchische Baumstruktur einen Knoten umfasst, und der Knoten
das erste Programm (11) und/oder
die erste Variable (12) und/oder
den ersten Speicherbereich (14)
repräsentiert,
wobei die Spezifikation der Haltebedingung (2) derart erfolgt, dass
in einem ersten Schritt der Knoten ausgewählt wird,
in einem zweiten Schritt eine Auswahl und/oder Eingabe erfolgt, wobei mit der Auswahl und/oder Eingabe spezifiziert wird, dass die Programmausführung
bei dem Beginn und/oder dem Ende der Ausführung des ersten Programms (11) und/oder
bei einem Lese- und/oder Schreibzugriff auf den ersten Wert des ersten Speicherbereichs und/oder bei einer Änderung des ersten Werts des ersten Speicherbereichs
unterbrochen werden soll.

6. Verfahren nach Anspruch 1, wobei das erste Programm (11) ein Unterprogramm und/oder eine Funktion umfasst, und
ein Beginn und/oder Ende der Ausführung des Unterprogramms und/oder ein Beginn und/oder Ende der Ausführung der Funktion als Programmzustandsänderung (3) angesehen wird, und
die Ausführung des Gesamtprogramms (1)
bei einem Beginn und/oder Ende der Ausführung des Unterprogramms und/oder
bei einem Beginn und/oder Ende der Ausführung der Funktion
unterbrochen wird.

7. Verfahren nach Anspruch 1 oder 4, wobei das Gesamtprogramm (1) mittels der grafischen Modellierungsumgebung (201) entsprechend der Spezifikationen des AUTOSAR-Standards modelliert wird, und
ein Programmcode des Gesamtprogramms (1) und/oder ein Programmcode des ersten Programms (11) vorliegt, wobei der Programmcode zumindest teilweise die Spezifikationen des AUTOSAR-Standards erfüllt, und
das erste Modellelement (202) und/oder das zweite Modellelement (203) und/oder das dritte Modellelement (205) und/oder das vierte Modellelement (204) einen Bestandteil des Programmcodes des Gesamtprogramms (1) und/oder einen Bestandteil des Programmcodes des ersten Programms (11) repräsentiert.

8. Verfahren nach Anspruch 7, wobei der AUTOSAR-Standard ein RTE-Ereignis definiert und das RTE-Ereignis als Programmzustandsänderung (3) angesehen wird und die Ausführung des Gesamtprogramms (1) unterbrochen wird, wenn das RTE-Ereignis eintritt.

9. Verfahren nach Anspruch 7 oder 8, wobei ein Quellcode-Debugger vorgesehen ist, und die Ausführung des Gesamtprogramms (1) und die Detektion der Programmzustandsänderung (3) mittels des Quellcode-Debuggers derart durchgeführt werden, dass mittels der Haltebedingung (2) ein Haltepunkt im Quellcode ermittelt wird und der Haltepunkt an den Quellcode-Debugger übermittelt wird.

10. Verfahren nach Anspruch 7, wobei der Bestandteil des Programmcodes des Gesamtprogramms (1) und/oder der Bestandteils des Programmcodes des ersten Programms (11) eine eindeutige Position innerhalb des Programmcodes einnimmt, die Position ermittelt wird,
und eine Programmanweisung zur Detektion der Programmzustandsänderung (3) und/oder Unterbrechung der Ausführung des Gesamtprogramms (1) vor und/oder nach der Position eingefügt wird,
oder der Bestandteil des Programmcodes durch eine Programmanweisung zur Detektion der Programmzustandsänderung (3) und/oder Unterbrechung der Ausführung des Gesamtprogramms (1) ersetzt wird.

11. Verfahren nach Anspruch 7, wobei der Bestandteil des Programmcodes des Gesamtprogramms (1) und/oder der Bestandteils des Program mcodes des ersten Programms (11) eine eindeutige Position innerhalb des Programmcodes einnimmt, die Position ermittelt wird, und ein Program mcode-Abschnitt des Gesamtprogramms (1) und/oder Programms angezeigt wird, wobei der Programmcode-Abschnitt den Bestandteil enthält und die in der Haltebedingung (2) spezifizierte Programmzustandsänderung (3) durch den Bestandteil erfolgt.

12. Verfahren nach Anspruch 1, wobei die Programmzustandsänderung (3) in einer zeitlich geordneten Datenbasis gespeichert wird, wenn sie nicht zu einer Unterbrechung der Programmausführung führt.

13. Verfahren nach Anspruch 1. Dabei wird eine Modifizierung des ersten Werts der ersten Variablen (12) aus dem ersten Speicherbereich vorgenommen. Die Modifizierung wird nach der Unterbrechung der Ausführung des Gesamtprogramms (1) durchgeführt. Nach der Modifizierung wird die Ausführung des Gesamtprogramms (1) fortgesetzt.
